# DEMANDE DE BREVET EUROPEEN

(11) **EP 2 489 549 A1**
(43) Date de publication de la demande: **22.08.2012**
(21) Numéro de dépôt: 12154980.2
(22) Date de dépôt: 10.02.2012
(51) Int. Cl.: B60Q 1/12, B62J 6/02, F21V 7/00, F21S 8/10

(54) **Dispositif d'éclairage et/ou de signalisation à correcteur d'inclinaison pour motocycle**

(30) Priorité: 16.02.2011 FR 1151247
(71) Demandeur: Valeo Vision, 93012 Bobigny (FR)
(72) Inventeur: Bos, Patrice, 93500 PANTIN (FR); Muller, Jean-Claude, 93600 AULNAY SOUS BOIS (FR)

(57) **Abrégé**

L'invention concerne un dispositif d'éclairage et/ou de signalisation (1) pour motocycle, comprenant :
- un dispositif de détection (20) d'une inclinaison du motocycle par rapport à un axe vertical (7), et
- un projecteur (2)
o comprenant un réflecteur (3) comprenant au moins deux parties adjacentes (4, 8, 12, 19) et
o supportant une source principale (11) et au moins une source additionnelle (9, 13),
- la source principale (11) produisant un faisceau lumineux à coupure (21) en association avec une des parties du réflecteur (3) et
- la source additionnelle (9, 13) produisant un faisceau complémentaire (22) en association avec une autre des parties du réflecteur (3),
- l'allumage de la source principale et/ou de la source additionnelle (9, 13) étant placé sous la dépendance du dispositif de détection (20), la source additionnelle (9, 13) étant agencée dans le projecteur (2) de sorte que son faisceau complémentaire (22) s'étende au-dessus de la coupure (5) du faisceau produit par la source principale (11) du côté où le motocycle s'incline.

Application aux motocycles.

## Description

Le secteur technique de la présente invention est celui des dispositifs d'éclairage et/ou de signalisation des motocycles et en général de tous véhicules à deux ou trois roues susceptibles de s'incliner pour prendre un virage.

Un motocycle est en général pourvu d'un dispositif d'éclairage avant, installé sur la fourche pour éclairer la route sur laquelle le motocycle circule. Quand le déplacement s'effectue sur la route selon un axe rectiligne, le dispositif d'éclairage utilisé en feu de croisement fournit un faisceau suffisant pour que le conducteur puisse voir correctement la trajectoire à emprunter.

En revanche, quand la route présente des virages, le motocycle s'incline à l'intérieur du virage pour prendre une trajectoire compatible avec la courbure du virage. Cette inclinaison permet de compenser la force centrifuge qui s'applique sur le motocycle au cours de cette trajectoire courbée.

Quand le dispositif d'éclairage est en position feu de croisement, le faisceau lumineux fournit par une source de lumière est occulté au dessus d'un axe horizontal, appelé coupure, de sorte à éviter tout éblouissement des usagers que le motocycle croise sur cette route. Cette coupure est ainsi confondue avec l'axe horizontal quand le motocycle circule de manière rectiligne et s'incline par rapport cet axe horizontal quand le motocycle se penche pour suivre une courbe.

Dans le cas d'un virage orienté vers la droite, le motocycle s'incline sur la droite et la coupure du faisceau lumineux apparaît à droite sous l'axe horizontal en formant un secteur angulaire d'angle équivalent à l'angle d'inclinaison du motocycle, créant ainsi une zone dépourvue d'éclairage. Or, cette zone et la trajectoire du motocycle se superposent ce qui réduit le champ de vision du conducteur du motocycle.

Le document FR 2 223 229 palie à cet inconvénient en faisant tourner le bloc optique monté sur la fourche du motocycle. Cette rotation est opérée sous l'impulsion d'un détecteur mécanique dont le fonctionnement est basé sur le déplacement inertiel d'une masselotte. Un tel dispositif est compliqué à mettre en oeuvre car il comporte de nombreuses pièces en mouvements telles qu'engrenages et pignons, par exemple.

Le document US 2006/0082221 divulgue un système d'allumage automatique de lampes latéralement installées sur un motocycle. Le dispositif divulgué par ce document présente l'inconvénient de ne pas éclairer de manière satisfaisante la trajectoire en courbe du motocycle.

Le but de la présente invention est donc de résoudre les inconvénients décrits ci-dessus principalement en allumant une source lumineuse auxiliaire placée dans le bloc d'optique et dont l'allumage est dépendant de l'inclinaison du motocycle. Le faisceau lumineux créé par cette source lumineuse auxiliaire vient éclairer la zone dépourvue d'éclairage sans pour autant éblouir les usagers que le motocycle croise car le faisceau additionnel est limité d'un côté par le faisceau principale et de l'autre par une coupure selon un plan horizontal.

L'invention a donc pour objet un dispositif d'éclairage et/ou de signalisation pour motocycle, comprenant
- un dispositif de détection d'une inclinaison du motocycle par rapport à un axe vertical, et
- un projecteur
   o comprenant un réflecteur comprenant au moins deux parties adjacentes et
   o supportant une source principale et au moins une source additionnelle,
- la source principale produisant un faisceau lumineux à coupure en association avec une des parties du réflecteur et
- la source additionnelle produisant un faisceau complémentaire en association avec une autre des parties du réflecteur,
- l'allumage de la source principale et/ou de la source additionnelle étant placé sous la dépendance du dispositif de détection, la source additionnelle étant agencée dans le projecteur de sorte que son faisceau complémentaire s'étende au-dessus de la coupure du faisceau produit par la source principale du côté où le motocycle s'incline.

Le faisceau complémentaire vient ainsi compléter le faisceau principal, autrement appelé faisceau lumineux à coupure, au dessus de la ligne de coupure. Pour ce faire, la source additionnelle est agencée latéralement par rapport à la source principale.

En feu de croisement il faut éviter d'éblouir les usagers que le motocycle croise. Le faisceau complémentaire est alors contenu entre la ligne de coupure quand celle-ci est inclinée et une ligne horizontale au-delà de laquelle un éblouissement apparaît.

Le réflecteur peut être formé d'une pièce unitaire comprenant les parties adjacentes mais il peut également être formé par une pluralité de réflecteurs distincts et juxtaposés, formant chacun une partie.

Selon une caractéristique de l'invention, la source principale et la source additionnelle sont des diodes électroluminescentes. Cette technologie convient particulièrement bien au dispositif selon l'invention qui requiert l'emploi d'au moins deux sources lumineuses dans un volume restreint. Une telle technologie évite l'échauffement consécutif à l'emploi d'une multiplicité de sources rayonnantes.

Selon encore une caractéristique de l'invention, les diodes électroluminescentes sont agencées sur un même support, le support présentant au moins deux faces ou plats recevant chacun une diode électroluminescente, les faces ou plats étant inclinés l'un par rapport à l'autre selon un angle aigu compris entre 65° et 85°. Avantageusement, le support présente une section triangulaire de sorte à définir trois faces ou plats, chacun recevant une source lumineuse.

Selon encore une autre caractéristique de l'invention, le support comprend un module de commande des diodes électroluminescentes ainsi qu'un dissipateur thermique. Le module de commande comprend des composants électroniques de commande et de puissance, ces derniers étant refroidis par le dissipateur thermique. Le module de commande gère l'allumage et l'extinction de la source principale et/ou de la source additionnelle et/ou d'une source supplémentaire. Le module de commande contrôle encore la progressivité ou l'adaptation de la puissance du faisceau complémentaire, par exemple en fonction de l'angle d'inclinaison déterminé par le dispositif de détection et/ou en fonction de la vitesse de déplacement du motocycle.

Avantageusement, le support reçoit le dispositif de détection d'inclinaison.

Avantageusement encore, le faisceau lumineux à coupure est formé par une coupe horizontale d'un premier côté de l'axe vertical et d'une coupe oblique comprise entre 5 et 25° au dessus de l'axe horizontal du côté opposé au premier côté par rapport à l'axe vertical.

La source principale comprend une seule diode électroluminescente qui rayonne à 180° quand le dispositif d'éclairage et/ou de signalisation permet de réaliser un faisceau lumineux à coupure plate, notamment selon le règlement N°113, *« Prescriptions uniformes relatives à l'homologation des projecteurs pour véhicules automobiles émettant un faisceau de croisement symétrique ou un faisceau de route ou les deux à la fois et équipés de lampes à incandescence, de sources lumineuses à décharge ou de modules »,* entré en vigueur le 11 août 2002 et publié sous l'égide des NATIONS UNIES à GENEVE.

La source principale comprend au moins deux diodes électroluminescentes, une première diode qui rayonne à 180° et une seconde diode électroluminescente qui rayonne entre 5° et 25° de sorte à se combiner pour former le faisceau lumineux à coupure, cette coupure étant dans ce cas un faisceau lumineux à coupure oblique mis en oeuvre dans un dispositif d'éclairage et/ou de signalisation, notamment selon le règlement N°112, *« Prescriptions uniformes relatives à l'homologation des projecteurs pour véhicules automobiles émettant un faisceau de croisement asymétrique ou un faisceau de route ou les deux à la fois et équipés de lampes à incandescence et*/*ou de modules à diode électroluminescente (DEL) »,* entré en vigueur le 11 août 2002 et publié sous l'égide des NATIONS UNIES à GENEVE.

Enfin, le dispositif de détection d'une inclinaison comprend entre autres un gyroscope ou un inclinomètre. Ce dispositif de détection est relié ou intégré au module de commande des diodes électroluminescentes.

Un tout premier avantage selon l'invention réside dans une augmentation de la sécurité pour le conducteur de motocycle équipé d'un tel dispositif car le champ de vision n'est pas obéré par l'inclinaison du motocycle.

Un autre avantage réside dans la facilité de mise en oeuvre et dans la fiabilité d'un tel dispositif. En effet, aucune pièce n'est en mouvement pour effectuer la fonction d'éclairage additionnel ce qui limite drastiquement le risque de panne.

D'autres caractéristiques, détails et avantages de l'invention ressortiront plus clairement à la lecture de la description donnée ci-après à titre indicatif en relation avec des dessins dans lesquels :
- la figure 1 est une vue de face d'un exemple de réalisation du dispositif d'éclairage et/ou de signalisation selon l'invention,
- la figure 2 est une première illustration du faisceau lumineux émis par le dispositif d'éclairage et/ou de signalisation selon l'invention,
- la figure 3 est une deuxième illustration du faisceau lumineux émis par le dispositif d'éclairage et/ou de signalisation selon l'invention,
- la figure 4 est une troisième illustration du faisceau lumineux émis par le dispositif d'éclairage et/ou de signalisation selon l'invention,
- la figure 5 est une vue de côté montrant un support utilisé dans le dispositif d'éclairage et/ou de signalisation selon l'invention,
- la figure 6 est une vue de face du support de la figure 5,
- la figure 7 est une vue de côté montrant une variante du support utilisé dans le dispositif d'éclairage et/ou de signalisation selon l'invention,
- la figure 8 est une vue de face du support de la figure 7.

Il faut noter que les figures exposent l'invention de manière détaillée pour mettre en oeuvre l'invention, lesdites figures pouvant bien entendu servir à mieux définir l'invention le cas échéant.

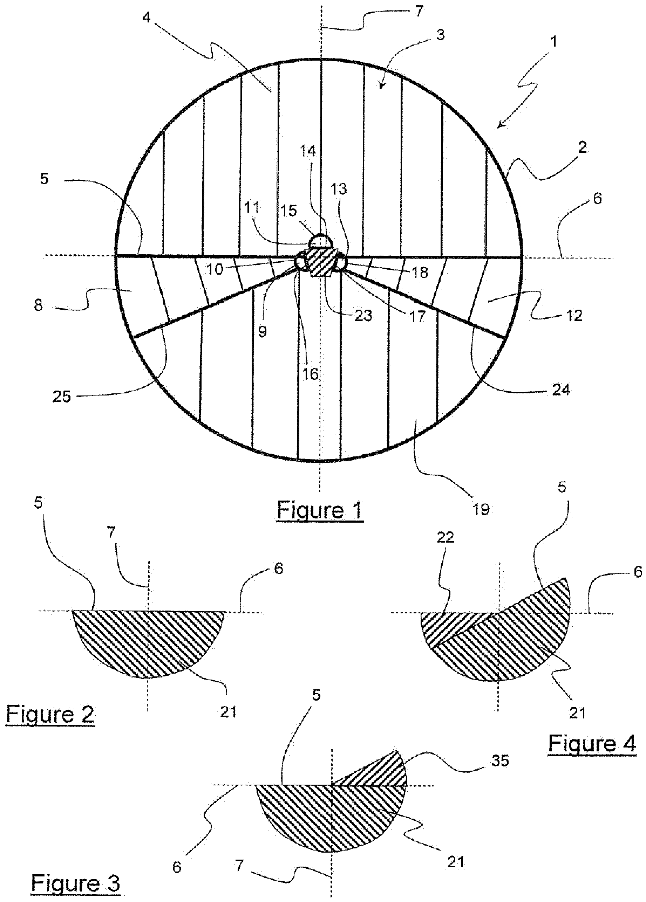

La figure 1 illustre un exemple de réalisation du dispositif d'éclairage et/ou de signalisation 1 équipant un motocycle. Un projecteur 2 est installé sur une partie avant du motocycle, par exemple sur sa fourche. Le projecteur 2 comprend un réflecteur 3 qui peut comporter plusieurs parties adjacentes. Ce réflecteur présente une surface interne réfléchissante qui peut être formée par un cuvelage du projecteur 2, c'est-à-dire le boîtier arrière du projecteur qui délimite sur l'arrière le volume intérieur du projecteur par rapport au volume extérieur de ce dernier. Ce réflecteur 3 peut également être formé par une ou plusieurs pièces rapportées à l'intérieur du projecteur et solidarisées sur le cuvelage de ce projecteur.

Le volume interne du projecteur 2 est délimité d'un côté par le cuvelage et de l'autre par une paroi transparente qui prend la forme d'une glace, de forme par exemple bombée. Cette glace protège les composants installés dans le volume intérieur du projecteur tout en autorisant le passage des faisceaux lumineux.

Une première partie 4 s'étend dans la zone supérieure du réflecteur 3 et forme un demi-cercle bordé d'un côté par une bordure périphérique courbée et de l'autre par une tranche plate. Cette tranche plate forme ce qu'il est connu d'appeler une coupure ou ligne de coupure 5 qui permet de couper un faisceau de lumière selon une direction horizontale 6 de sorte à limiter le faisceau lumineux en dessous d'un certain seuil. Cette coupure est utilisée an combinaison avec la fonction feu de croisement pour éviter d'éblouir les usagers qui arrivent en face du motocycle. Dans cet exemple de réalisation, la coupure 5 est horizontale d'un côté comme de l'autre d'un axe vertical 7. Dans un autre exemple de réalisation évoquée ci-dessous, la ligne de coupure présente un secteur plat et un secteur oblique, au dessus de l'axe horizontal.

La première partie 4 du réflecteur renvoie un faisceau lumineux émis par une source principale 11, cette dernière pouvant être une lampe à incandescence ou une lampe au Xénon. Toutefois, l'invention trouve une application toute particulière quand cette source principale est constituée par une diode électroluminescente car les pertes par effet joule d'un tel type de source sont faibles ce qui permet l'emploi de sources lumineuses supplémentaires dans un volume clos comme celui d'un projecteur selon l'invention. Cette source principale 11 est formée d'une embase 14 et d'un bulbe 15 d'où un flux lumineux sort selon un secteur angulaire de 180°. On notera que l'embase 14 est parallèle à la coupure 5 de sorte à distribuer ce faisceau lumineux sur la première partie 4 du réflecteur 3, formé en demi-cercle.

Le réflecteur 3 présente une deuxième partie 8 dont la fonction est de réfléchir un faisceau lumineux complémentaire fournit par une source lumineuse additionnelle 9. On notera que la deuxième partie 8 du réflecteur 3 est distincte de la première partie 4 tout en étant immédiatement adjacente à celle-ci.

Cette deuxième partie 8 forme un secteur triangulaire, où les deux côtés passent par un centre qui croise l'axe vertical 7 et l'axe horizontal 6, formant un angle compris entre 5 et 25°. Une telle fourchette de valeurs permet d'éclairer suffisamment la route quand le motocycle s'incline.

La source lumineuse additionnelle 9 est installée dans le projecteur de sorte à éclairer cette deuxième partie 8 du réflecteur 3. Dans le cas où cette source additionnelle 9 est formée par une diode électroluminescente, cette dernière est installée de sorte que son bulbe 10 soit orienté en direction de la deuxième partie 8 du réflecteur de sorte à concentrer le flux ou faisceau lumineux sur cette deuxième partie 8. Cette source lumineuse additionnelle 9 comprend également une embase 16 qui est agencé dans un plan orienté angulairement par rapport à l'embase 14 de la source principale 11. Cet angle aigu est par exemple compris entre 60 et 85°.

Ainsi, la deuxième partie 8 du réflecteur 3 combinée à la source lumineuse additionnelle 9 est susceptible d'éclairer une zone située à droite et à l'avant du motocycle.

Dans cet exemple de réalisation de l'invention, le réflecteur 3 comprend une troisième partie référencée 12 dont la disposition est opposée à la deuxième partie 8 par rapport à l'axe vertical 7 et dont la structure est identique cette deuxième partie 8 du réflecteur.

Cette troisième partie 12 renvoie un faisceau lumineux fabriqué par une autre source additionnelle, appelée ci-après source auxiliaire de lumière 13. Cette dernière prend par exemple la forme d'une diode électroluminescente qui présente une embase 17 coiffée par un bulbe 18, ce bulbe 18 faisant face à la troisième partie 12 du réflecteur 3.

Comme pour la source additionnelle 9, l'embase 17 de la source auxiliaire 13 s'étend dans un plan qui forme un angle aigu avec un plan dans lequel s'étend l'embase 14 de la source principale 11, cette angle étant compris entre 60 et 85°.

Cette figure montre également comment sont solidarisées cette source principale et cette source additionnelle. L'embase 14 de la source principale 11 et l'embase 16 de la source additionnelle 9 sont fixées sur un support 23 qui s'étend dans le projecteur 2. De manière avantageuse, ce support est installé au travers du réflecteur 3 au croisement de la ligne de coupure 5 est des lignes 24 et 25 qui bordent respectivement la deuxième partie 8 et la troisième partie 12 formant le réflecteur 3.

Les deuxième et troisième parties 8 et 12 sont du côté opposées à la première partie 4 par rapport à la coupure 5. Ainsi, on comprend que la symétrie opérée par le réflecteur permet de projeter le faisceau complémentaire au dessus de cette ligne qui forme la coupure 5.

Le projecteur 2 assure aussi l'éclairage en feu de route, c'est-à-dire un éclairage dans lequel la coupure n'est pas assurée pour le cas où aucun usager ne croise le motocycle.

Cette fonction feu de route est assurée par une quatrième partie 19 du réflecteur 3, cette dernière étant immédiatement adjacente à la deuxième partie et à la troisième partie, respectivement référencée 8 et 12.

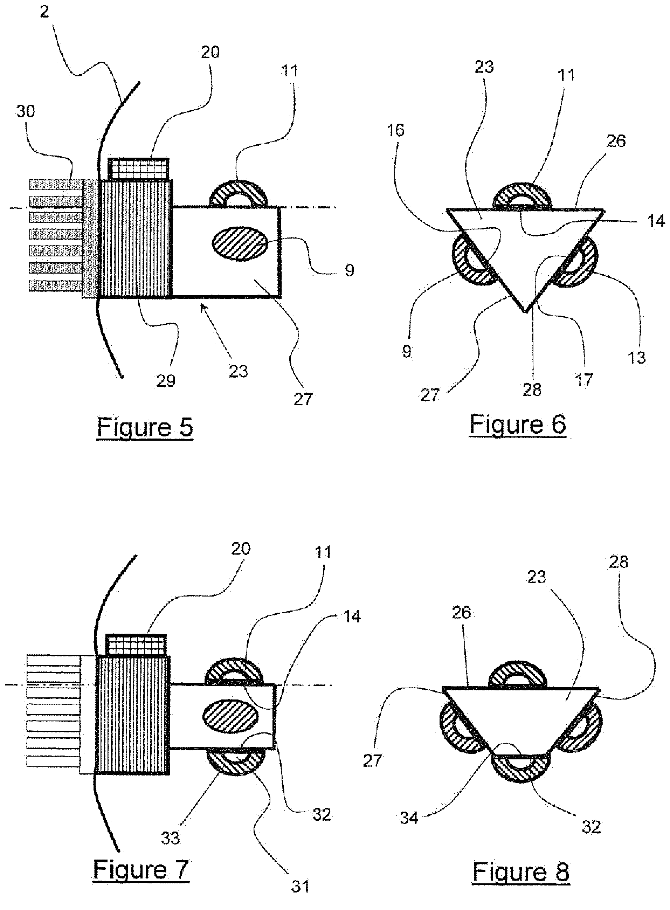

L'allumage ou l'extinction de la source additionnelle 9, et éventuellement de la source auxiliaire de lumière 13, sont placés sous la dépendance d'un dispositif de détection de l'inclinaison (référencé 20 sur la figure 5) du motocycle. Ce dispositif de détection peut être placé sur le cadre ou sur la fourche du motocycle. Il est également avantageux de le combiner avec le projecteur 2, par exemple en le solidarisant sur le support 23.

Ce dispositif de détection 20 comprend des moyens électroniques capables de mesurer la valeur d'inclinaison du motocycle et de commander, en fonction de cette mesure, l'allumage de la source additionnelle 9 et/ou de la source auxiliaire 13. Cette détection d'inclinaison est opérée par exemple au moyen d'un capteur d'inclinaison autrement appelé inclinomètre, ou d'un gyroscope.

La figure 2 illustre le faisceau à coupure plate projeté par le projecteur 2, notamment un faisceau à coupure plate selon le règlement N°113 précité. Le réflecteur 3 réfléchit le faisceau lumineux à coupure 21 de manière symétrique par rapport à l'axe horizontale 6. Ainsi, le faisceau à coupure 21 émis par la source principale 11 est projeté sur la route de manière à éclairer cette dernière en dessous de l'axe horizontal 6 confondu avec la ligne de coupure 5. Dans la situation où le motocycle est vertical, aucune des sources additionnelle et/ou auxiliaire n'est activée.

La figure 3 illustre le faisceau à coupure oblique projeté par le projecteur 2, notamment un faisceau à coupure oblique selon le règlement N°112 précité, c'est-à-dire. Le réflecteur 3 réfléchit le faisceau lumineux à coupure 21 de manière symétrique par rapport à l'axe horizontale 6. Ainsi, le faisceau à coupure 21 émis par la source principale 11 est projeté sur la route de manière à éclairer cette dernière en dessous de l'axe horizontal 6 confondu avec la ligne de coupure 5. Dans le cadre du faisceau à coupure oblique, notamment dans le cadre dudit règlement N°112, la source auxiliaire de lumière 13 est activée pour éclairer le bas-côté de la route. Dans la situation où le motocycle est vertical, un faisceau lumineux oblique illustré par la référence 35 est ainsi projeté sur la route, au dessus de la ligne de coupure 5 et au dessus de l'axe horizontal 6. On comprend ainsi que le faisceau lumineux à coupure oblique est formée par une coupe horizontale d'un premier côté de l'axe vertical 7, par exemple à gauche de ce dernier, et d'une coupure oblique comprise entre 5 et 25° au dessus de l'axe horizontal 6 du côté opposé au premier côté par rapport à l'axe vertical 7, cette coupure oblique résultant de l'allumage de la source auxiliaire 13. Le faisceau lumineux à coupure oblique est ainsi constitué du faisceau lumineux à coupure 21 combiné au faisceau lumineux oblique 35. La source auxiliaire de lumière 13 est la diode électroluminescente qui rayonne à 180° alors que le faisceau lumineux oblique 35 est réalisé par la diode électroluminescente qui rayonne selon un angle fixe comprise entre 5° et 25° au dessus de l'axe horizontal 6, avantageusement 12° au dessus de l'axe horizontal 6.

Bien entendu, l'invention peut s'appliquer à titre non limitatif autant à un dispositif d'éclairage et/ou de signalisation qui répond autant au règlement N°113 que N°112, comme illustré aux figures 2 et 3.

La figure 4 illustre une situation où le motocycle est incliné pendant une courbe vers la gauche. Le motocycle est ici équipé d'un dispositif d'éclairage et/ou de signalisation qui permet de conserver un faisceau à coupure oblique, par exemple conformément au règlement N°112 précité.

Cette inclinaison du motocycle provoque une inclinaison de la ligne de coupure 5 qui n'est ainsi plus confondue avec l'axe horizontal 6. Le dispositif de détection 20 prend en compte cette inclinaison et ordonne l'allumage de la source additionnelle 9 qui produit un faisceau lumineux complémentaire 22 qui vient compléter l'espace compris entre la coupure 5 et l'axe horizontal 6. On comprend ainsi que le faisceau complémentaire est au dessus de la ligne de coupure 5 mais en dessous d'un axe horizontal 6.

Ce faisceau complémentaire 22 se combine avec le faisceau à coupure 21 et il est ainsi possible d'améliorer l'éclairage de la route emprunté par le motocycle sans pour autant éblouir les usagers que ce dernier croise puisque le faisceau complémentaire est limité à l'axe horizontal 6.

Une telle situation est en tous points transposables pour le cas où le motocycle s'incline vers la droite. En effet, le dispositif de détection ordonne alors l'allumage de la source auxiliaire 13 de lumière de sorte à offrir les mêmes bénéfices sur le côté droit du faisceau à coupure 21, c'est-à-dire entre la coupure et l'axe horizontal.

La figure 5 montre un exemple de réalisation du support 23. Ce dernier relie une pluralité de composants tels que la source principale 11, la source additionnelle 9 et/ou la source auxiliaire 13, un moyen électronique de commande de ces sources et le dispositif de détection 20 de l'inclinaison du motocycle.

Le support 23 présente un plat supérieur 26, sur lequel est fixée la source principale 11, et deux plats latéraux 27 et 28. Un module électronique de commande 29 est également solidarisé sur le support 23, ce dernier servant à commander les diodes électroluminescentes formant la source principale 11 et la source additionnelle 9.

Le module électronique de commande 29 comprend un dissipateur thermique 30 qui s'étend à l'extérieur du projecteur 2 de sorte à échanger thermiquement avec le flux d'air environnant le projecteur. Autrement dit, ce dissipateur thermique 30 est disposé en dehors du volume intérieur du projecteur et assure le refroidissement des composants de puissance intégrés au module de commande 29.

Le support 23 ou le module de commande 29 permettent également de recevoir le dispositif de détection 20 de l'inclinaison du motocycle. Cet exemple de réalisation présente l'avantage de former une pièce unitaire qui ne nécessite qu'une alimentation électrique. Ainsi, il est possible d'adapter cet ensemble unitaire en lieu et place d'ampoule classique sur des motocycles en circulation.

La figure 6 montre la disposition angulaire de la source principale 11, de la source additionnelle 9 et/ou de la source auxiliaire 13 vis-à-vis du support 23. La section de ce support est triangulaire et chaque face reçoit une diode électroluminescente. La source principale 11 est solidarisée sur un plat supérieur 26 par l'intermédiaire de son embase 14. La source additionnelle 9 est quant à elle fixée sur un premier plat latéral 27 via l'embase 16 qui constitue la diode électroluminescente alors que la source lumineuse auxiliaire 13 est attachée au deuxième plat latéral 28 par l'entremise de son embase 17.

Les figures 7 et 8 montrent une variante intégrant une source lumineuse supplémentaire 31 dédiée à la fonction feu de route. Cette source lumineuse supplémentaire est notamment une diode électroluminescente formée par une embase 32 couverte par un bulbe 33. Ce dernier fait face à la quatrième partie 19 du réflecteur 3 et l'embase 32 s'étend parallèlement à l'embase 14 qui forme la diode électroluminescente de la source principale 11. Autrement dit, le support 23 présente une section polygonale où, en plus du plat supérieur 26 et des plats latéraux 27 et 28, est formé un plat inférieur 34 qui sert de support à la source lumineuse supplémentaire 31, notamment par solidarisation de l'embase 32 sur le plat inférieur 34.

L'allumage et/ou l'extinction de la source additionnelle 9 et/ou de la source auxiliaire 13 peut être opéré par le module de commande 29 selon un mode tout ou rien ou selon un mode adaptatif ou progressif, par exemple en fonction de la valeur d'inclinaison du motocycle et/ou en fonction de la vitesse du motocycle. Dans ce dernier cas, le module de commande 20 reçoit une information représentative de la vitesse du motocycle.

En mode d'allumage ou d'extinction progressif, le module de commande 29 gère la puissance électrique fournie à la source additionnelle de sorte à contrôler l'intensité du flux lumineux émis par la ou les diodes électroluminescentes.

L'invention trouve une application particulière dans l'utilisation de diodes électroluminescentes pour former la source principale 11, la source additionnelle 9, la source auxiliaire 13 et la source supplémentaire 31 car ces diodes peuvent être installées dans un milieu restreint et clos sans risquer de détérioration par une émission de chaleur émise par les sources.

L'invention s'étend également au cas où la ligne de coupure 5 n'est pas plate. En effet, le faisceau lumineux à coupure peut être formée par une coupe horizontale d'un premier côté de l'axe vertical 7 et d'une coupe oblique comprise entre 5 et 25° au dessus de l'axe horizontal 6 du côté opposé au premier côté par rapport à l'axe vertical 7. On comprend ainsi que la coupure d'un tel feu de croisement n'est pas plate puisque une section oblique est éclairée au dessus de l'axe horizontal selon l'angle précité.

La partie du faisceau présentant une coupure horizontale est réalisée au moyen de la source principale 11 alors que la section angulaire délimitant la coupure oblique est créée au moyen d'une seconde diode électroluminescente qui rayonne entre 5° et 25°. Les deux faisceaux se combinent ensemble pour former le faisceau lumineux à coupure. Dans une telle situation, cette seconde diode remplace la source additionnelle 9 et son allumage est coordonné avec l'allumage de la diode électroluminescente qui forme la source principale. Ainsi, le dispositif d'éclairage et/ou de signalisation comprend une source additionnelle installée sur le support de manière opposée à la seconde diode et dédiée à l'éclairage adaptatif de la route quand le motocycle s'incline côté gauche.

Le référentiel gauche/droit employé ci-dessus est déterminé par la position du conducteur installé sur la selle du motocycle.

## Revendications

1. Dispositif d'éclairage et/ou de signalisation (1) pour motocycle, comprenant
- un dispositif de détection (20) d'une inclinaison du motocycle par rapport à un axe vertical (7), et
- un projecteur (2)
o comprenant un réflecteur (3) comprenant au moins deux parties adjacentes (4, 8, 12, 19) et
o supportant une source principale (11) et au moins une source additionnelle (9, 13),
- la source principale (11) produisant un faisceau lumineux à coupure (21) en association avec une des parties du réflecteur (3) et
- la source additionnelle (9, 13) produisant un faisceau complémentaire (22) en association avec une autre des parties du réflecteur (3),
- l'allumage de la source principale et/ou de la source additionnelle (9, 13) étant placé sous la dépendance du dispositif de détection (20), la source additionnelle (9, 13) étant agencée dans le projecteur (2) de sorte que son faisceau complémentaire (22) s'étende au-dessus de la coupure (5) du faisceau produit par la source principale (11) du côté où le motocycle s'incline.

2. Dispositif selon la revendication 1, dans lequel la source principale (11) et la source additionnelle (9, 13) sont des diodes électroluminescentes.

3. Dispositif selon la revendication 2, dans lequel les diodes électroluminescentes sont agencées sur un même support (23), le support (23) présentant au moins deux plats (26, 27, 28) recevant chacun une diode électroluminescente, les plats (26, 27) étant inclinés l'un par rapport à l'autre selon un angle aigu compris entre 60° et 85°.

4. Dispositif selon la revendication 3, dans lequel le support (23) comprend un module de commande (29) des diodes électroluminescentes ainsi qu'un dissipateur thermique (30).

5. Dispositif selon l'une quelconque des revendications 3 à 4, dans lequel le support (23) reçoit le dispositif de détection (20) d'inclinaison.

6. Dispositif selon l'une quelconque des revendications précédentes, dans lequel le faisceau lumineux à coupure (21) est formée par une coupe horizontale d'un premier côté de l'axe vertical (7) et d'une coupure oblique comprise entre 5 et 25° au dessus de l'axe horizontal (6) du côté opposé au premier côté par rapport à l'axe vertical (7).

7. Dispositif selon l'une quelconque des revendications précédentes, dans lequel la source principale (11) comprend au moins deux diodes électroluminescentes, une première diode électroluminescente rayonne à 180° et une seconde diode électroluminescente rayonne entre 5° et 25° de sorte à former ensemble un faisceau lumineux à coupure oblique.

8. Dispositif selon l'une quelconque des revendications précédentes, dans lequel le dispositif de détection (20) d'inclinaison comprend au moins un gyroscope ou un inclinomètre.
